# EUROPEAN PATENT SPECIFICATION

(11) **EP 1 148 216 B1**
(45) Date of publication and mention of the grant of the patent: **06.09.2006**
(21) Application number: 01109545.2
(22) Date of filing: 17.04.2001
(51) Int. Cl.: F01P 7/16, F02M 31/10

(54) **Cooling water passage structure for water-cooled type internal combustion engine**
Kühlkanalstruktur für eine wassergekühlte Brennkraftmaschine
Structure de conduit de refroidissement pour un moteur à combustion interne refroidi par eau

(30) Priority: 17.04.2000 JP 2000115415
(43) Date of publication of application: 24.10.2001
(73) Proprietor: HONDA GIKEN KOGYO KABUSHIKI KAISHA, Minato-ku, Tokyo (JP)
(72) Inventor: Takahashi, Katsunori K.K. Honda Gijutsu Kenkyusho, Saitama (JP); Nakano, Shinichi K.K. Honda Gijutsu Kenkyusho, Saitama (JP); Mizumura, Sakae K.K. Honda Gijutsu Kenkyusho, Saitama (JP)
(74) Representative: Quinterno, Giuseppe

(56) References cited:
- US-A- 1 550 862
- US-A- 4 557 223
- US-A- 5 079 488
- PATENT ABSTRACTS OF JAPAN vol. 1998, no. 11, 30 September 1998 (1998-09-30) & JP 10 176617 A (HONDA MOTOR CO LTD), 30 June 1998 (1998-06-30)

## Description

### [Technical Field of the Invention]

The present invention relates to a cooling water passage structure for a water-cooled type internal combustion engine, and particularly to a cooling water passage structure for a water-cooled type internal combustion engine such that the flow of cooling water through a hot water riser passage from a thermostat valve toward a carburetor can be caused and stopped assuredly without damaging the degree of freedom in laying out the passage and without complicating structure.

### [Prior Art]

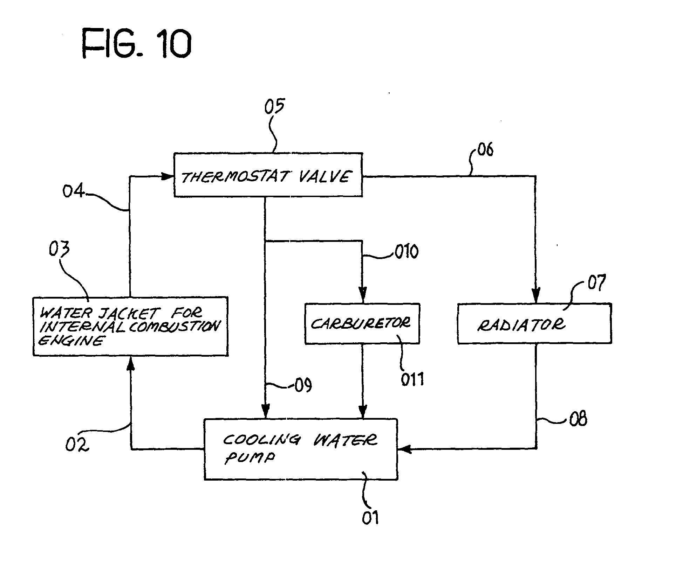

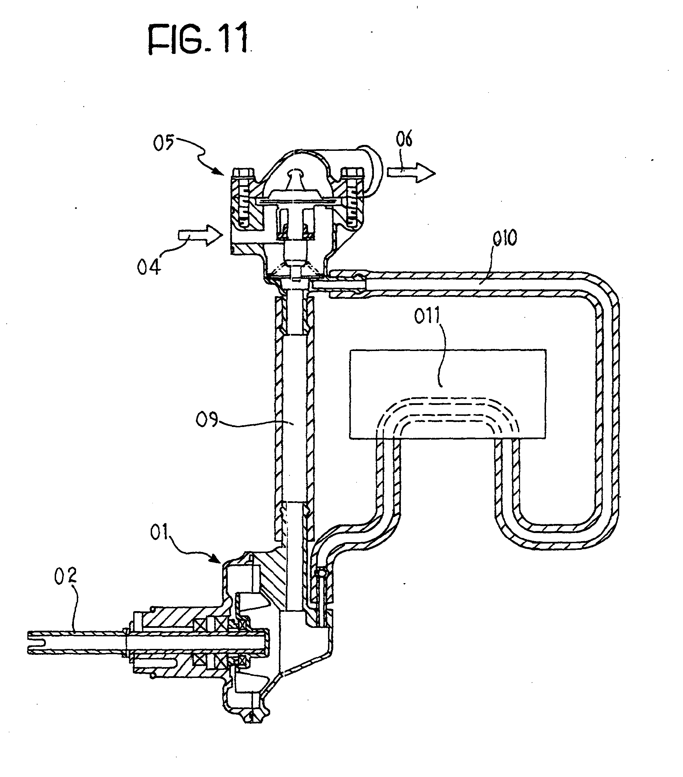

Fig. 10 is a total structural diagram showing one example of a conventional cooling water passage structure for a water-cooled type internal combustion engine, and Fig. 11 is a partly omitted schematic view of the same.

Cooling water is fed from a cooling water pump 01 through a passage 02 to a water jacket 03 for an internal combustion engine, where it cools the engine while itself being heated. The cooling water is then fed through passages 04 and 06 to a radiator 07, where it is cooled, before being fed through a passage 08 back to an inlet of the cooling water pump 01.

In such a cooling water passage structure as this, a thermostat valve 05 is provided between the water jacket 03 and the radiator 07. In addition, a by-pass passage 09 extending from the thermostat valve 05 to the inlet of the cooling water pump 01 and a hot water riser passage 010 extending from the thermostat valve 05 via a carburetor 011 to the inlet of the cooling water pump 01 are provided.

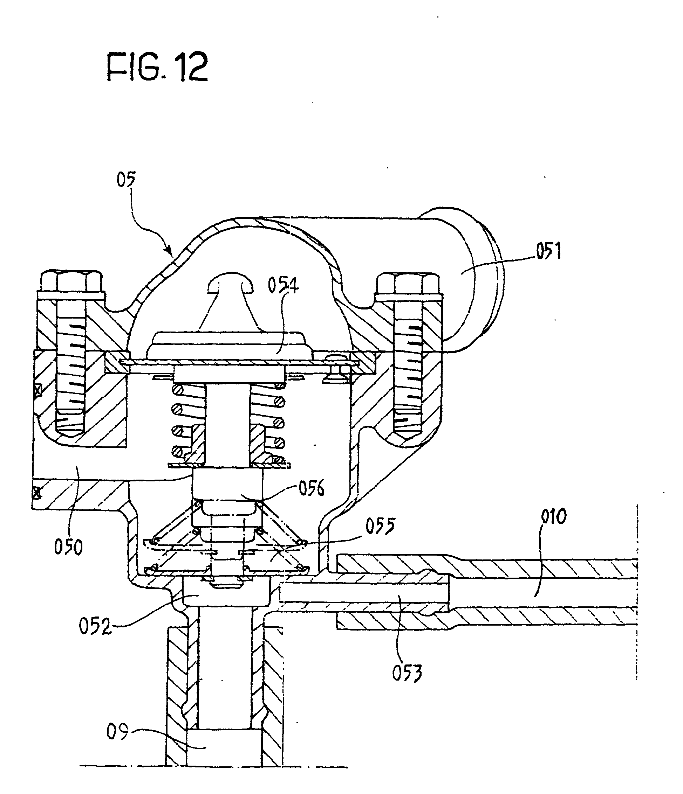

Next, Fig. 12 is a detailed vertical sectional side view of the thermostat valve 05 shown in Figs. 10 and 11.

In these figures, numeral 050 denotes a cooling water intake portion, 051 denotes a first cooling water discharge portion, 052 denotes a second cooling water discharge portion, and 053 denotes a third cooling water discharge portion. The third cooling water discharge portion 053 is branched from the second cooling water discharge portion 052. The passage 04 in Fig. 10 is connected to the cooling water intake portion 50, and cooling water is introduced there from the water jacket 03 for the internal combustion engine. The passage 06 extending to the radiator 07 is connected to the first cooling water discharge portion 051. The by-pass passage 09 extending to the cooling water pump 01 is connected to the second cooling water discharge portion 052, and the hot water riser passage 010 extending to the carburetor 011 is connected to the third cooling water discharge portion 053.

The temperature of cooling water flowing into the thermostat valve 05 is detected by a temperature-sensitive portion 056 in which a wax or the like is contained. In the condition where the temperature of the cooling water is not higher than a predetermined temperature, a first valve 054 is closed, whereby the cooling water intake portion 050 and the first cooling water discharge portion 051 are shut off from each other. When the temperature of the cooling water is raised to or above the predetermined temperature, the first valve 054 is opened so that the cooling water intake portion 050 and the first cooling water discharge portion 051 are communicated with each other, whereby the cooling water heated to a high temperature at the water jacket 03 of the internal combustion engine is supplied to the radiator 07, where it is cooled.

Further, a second valve 055 is provided at the second cooling water discharge portion 052 in a lower portion of the thermostat valve 05, and is closed and opened in reverse conjunction with the opening and closure of the first valve 054. Therefore, in the condition where the temperature of the cooling water is at or below the predetermined temperature, the second valve 055 is opened so that the cooling water intake portion 050 is communicated with the second cooling water discharge portion 052 and the third cooling water discharge portion 053; on the other hand, when the temperature of the cooling water is raised to or above the predetermined temperature, the second valve 055 is closed so that the cooling water intake portion 050 is shut off from the second cooling water discharge portion 052 and the third cooling water discharge portion 053. Thus, at the time of starting the internal combustion engine at a low temperature or in similar cases, the cooling water heated in the water jacket 03 is supplied into a jacket for the carburetor 011, where it heats the portions near a low-speed fuel supply port in the carburetor 011, whereby the low-speed fuel supply port is protected from icing.

### [Problem to be Solved by the Invention]

In the cooling water passage structure according to the prior art, the inlet of the hot water riser passage 010, or the third cooling water discharge portion 053, is branched from the inlet of the by-pass passage 09, or the second cooling water discharge portion 052; therefore, when the second valve 055 of the thermostat valve 05 opens and closes the inlet of the bottom by-pass passage 09, the inlet of the hot water riser passage 010 is indirectly opened and closed. Namely, there is no mechanism for directly opening and closing the inlet of the hot water riser passage 010. Therefore, in order to completely cut off the water flow through the hot water riser passage 010 when the second valve 055 is closed, the position of the hot water riser passage 010 must be so selected that there is no pressure difference between the by-pass passage 09 and the hot water riser passage 010, so that there is no freedom in laying out the hot water riser passage 010.

### [Means for Solving the Problem]

In order to solve the above-mentioned problems, according to the invention as set forth in claim 1, there is provided a cooling water passage structure for a water-cooled type internal combustion engine comprising a cooling water pump provided between a water jacket for the internal combustion engine and a radiator, a thermostat valve for controlling the quantity of cooling water circulated, and a by-pass passage through which the cooling water is circulated without being circulated via the radiator during when it is cold, wherein one end of a hot water riser passage disposed in parallel with the by-pass passage and extending via a carburetor is communicated with a port (intake port or discharge port) of the cooling water pump, and the other end is communicated with the thermostat valve independently from a by-pass passage port (inflow port or outflow port) opening and closing portion of the thermostat valve.

Because the invention as set forth in claim 1 is constituted as described above, there is no need to take into account the pressure balance between the by-pass passage and the hot water riser passage or the like. Therefore, the flow of cooling water through the hot water riser passage can be caused and stopped assuredly without damaging the degree of freedom in laying out the hot water riser passage. Namely, the degree of freedom in laying out the hot water riser passage is enhanced.

The cooling system set forth in claim 2 is characterized in that a port of the by-pass passage and a port of the hot water riser passage in the thermostat valve are opened and closed by the same valve body.

The cooling system as set forth in claim 2 has an advantage in cost, weight and space, as compared with the case where a separate opening and closing means is provided for the hot water riser passage in order to assuredly cause and stop the flow of cooling water through the hot water riser passage.

### [Mode for Carrying Out the Invention]

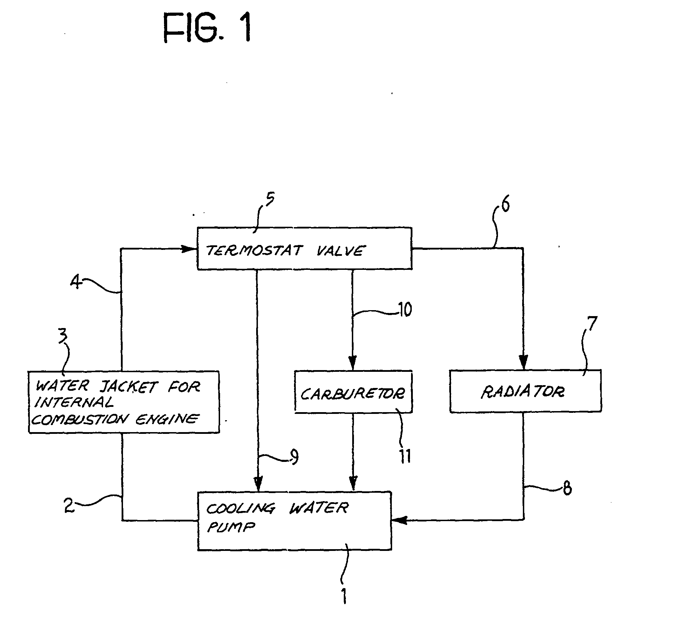

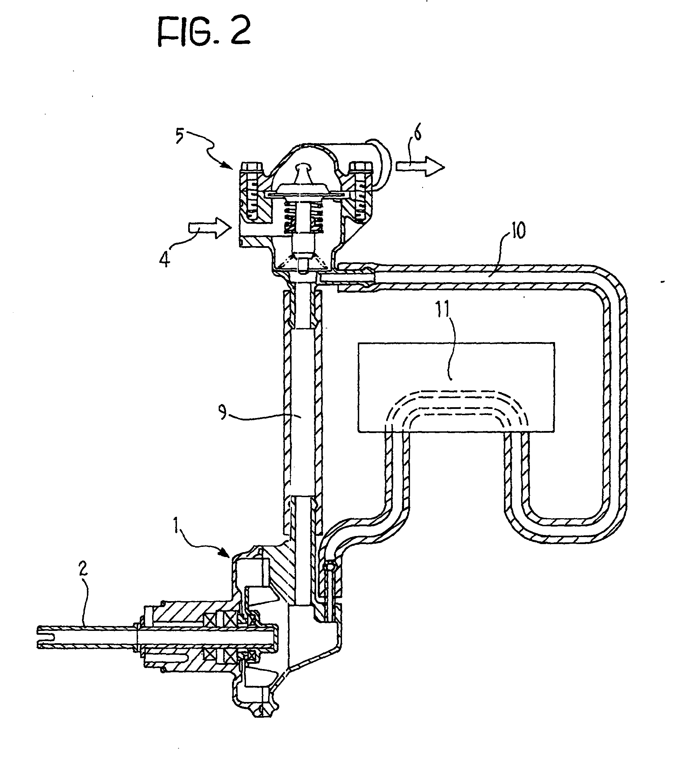

Fig. 1 is a total structural diagram showing one embodiment of the present invention, and Fig. 2 is a partly omitted schematic view of the same.

Cooling water is fed from a cooling water pump 1 through a passage 2 to a water jacket 3 for an internal combustion engine, where it cools the engine while itself being heated. Then, the cooling water flows through passage 4 and 6 to a radiator 7, where it is cooled, before flowing through a passage 8 back to an inlet of the cooling water pump 1.

In such a cooling water circulating passage, a thermostat valve 5 is provided between the water jacket 3 and the radiator 7. In addition, a by-pass passage 9 extending from the thermostat valve 5 to an inlet of the cooling water pump 1 and a hot water riser passage 10 extending from the thermostat valve 5 via a carburetor 11 to an inlet of the cooling water pump 1 are provided.

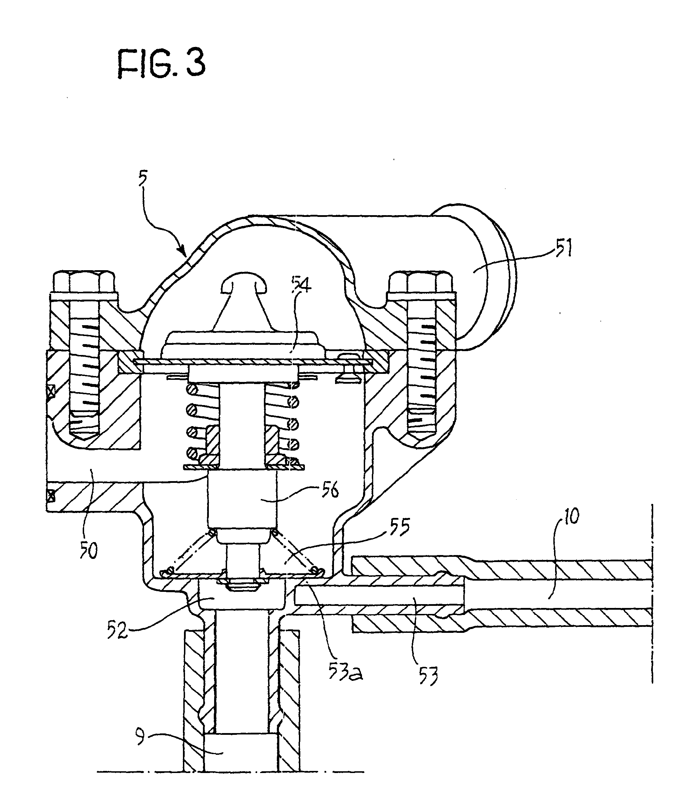

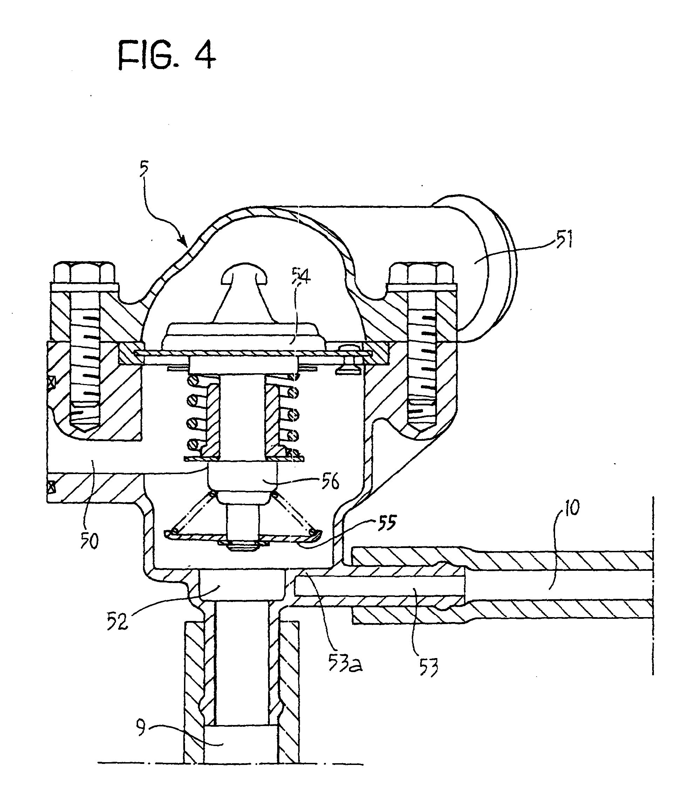

Fig. 3 is a detailed vertical sectional side view showing the condition where a radiator-side outlet of the thermostat valve 5 in Figs. 1 and 2 is opened, and Fig. 4 is a detailed vertical sectional side view showing the condition where the radiator-side outlet is closed.

In these figures, numeral 50 denotes a cooling water intake portion, 51 denotes a cooling water discharge portion, 52 denotes a second cooling water discharge portion, and 53 denotes a third cooling water discharge portion. The passage 4 in Fig. 1 is connected to the cooling water intake portion 50, and cooling water is introduced from the water jacket 3 for the internal combustion engine. A passage 6 extending to the radiator 7 is connected to the first cooling water discharge portion 51. A by-pass passage 9 extending to the cooling water pump 1 is connected to the second cooling water discharge portion 52, and a hot water riser passage 10 extending to a carburetor 11 is connected to the third cooling water discharge portion 53. The third cooling water discharge portion 53 is communicated with the cooling water intake portion 50 via a through-hole 53a. Namely, the second cooling water discharge portion 52 and the third cooling water discharge portion 53 are independent from each other, instead of the conventional structure in which one of them is branched from the other.

The temperature of the cooling water flowing into the thermostat valve 5 is detected by a temperature-sensitive portion 56 in which a wax or the like is contained. In the condition where the temperature of the cooling water is not higher than a predetermined temperature, a first valve 54 is closed, whereby the cooling water intake portion 50 and the first cooling water discharge portion 51 are shut off from each other. When the temperature of the cooling water is raised to or above the predetermined temperature, the first valve 54 is opened to communicate the cooling water intake portion 50 with the first cooling water discharge portion 51, whereby the cooling water heated to a high temperature at the water jacket 3 of the internal combustion engine is supplied to the radiator 7, where it is cooled.

Further, in a lower portion of the thermostat valve 5, a second valve 55 is provided at the second cooling water discharge portion 52 and the third cooling water discharge portion 53, and is closed and opened in reverse conjunction with the opening and closure of the first valve 54. Therefore, in the condition where the temperature of the cooling water is not higher than the predetermined temperature, the second valve 55 is opened, whereby the cooling water intake portion 50 is communicated with the second cooling water discharge portion 52 and the third cooling water discharge portion 53. On the other hand, when the temperature of the cooling water is raised to or above the predetermined temperature, the second valve 55 is closed, whereby the cooling water intake portion 50 is shut off from the second cooling water discharge portion 52 and the third cooling water discharge portion 53. Thus, at the time of starting the internal combustion engine at a low temperature or in similar cases, the cooling water heated in the above-mentioned water jacket 3 is supplied to a jacket for the carburetor 11, to heat the portions near a low-speed fuel supply port in the carburetor 11, whereby the low-speed fuel supply port is protected from icing.

According to this embodiment, the second cooling water discharge portion 52 and the third cooling water discharge portion 53 are provided independently from each other, instead of the conventional structure in which one of them is branched from the other, so that there is no need for taking into account the pressure balance between the by-pass passage 9 and the hot water riser passage 10 or the like. Therefore, the flow of the cooling water in the hot water riser passage 10 can be caused and stopped assuredly without damaging the degree of freedom in laying out the hot water riser passage 10. Namely, the degree of freedom in laying out the hot water riser passage 10 is enhanced.

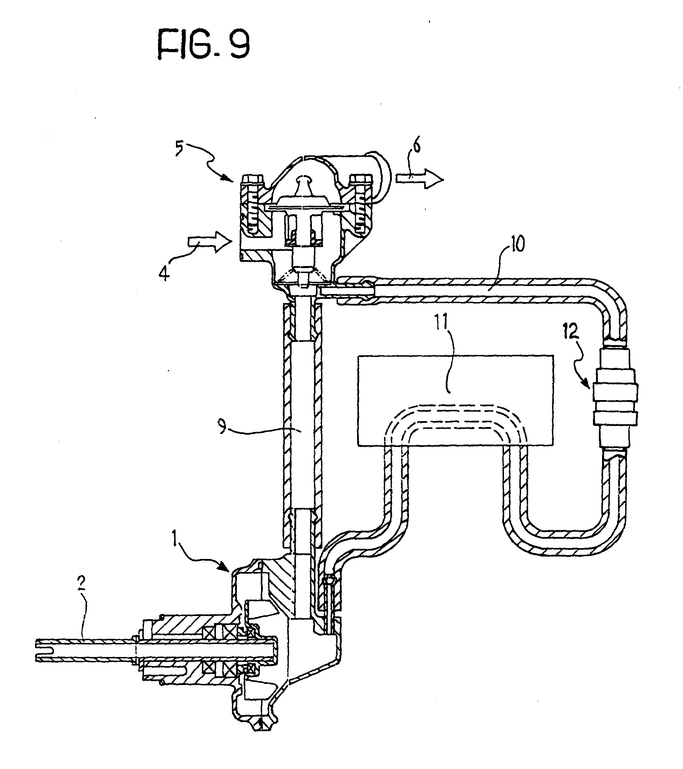

Further, in this embodiment, the second cooling water discharge portion 52 and the third cooling water discharge portion 53 are simultaneously opened and closed by the same valve body (the second valve 55). This is advantageous from the viewpoints of cost, weight and space, as compared with the case where a separate opening and closing means for the hot water riser passage 10, for example, a thermo-valve 12 for exclusive use for the hot water riser passage 10 is provided as shown in Fig. 9 so that the flow of cooling water in the hot water riser passage 10 can be assuredly caused and stopped.

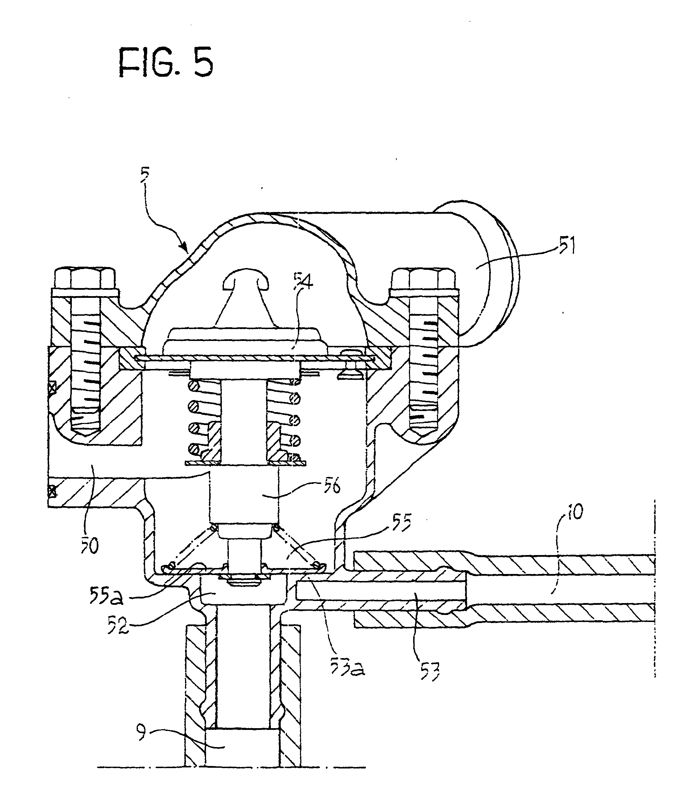

Next, Fig. 5 is a vertical sectional side view of a thermostat valve according to a second embodiment of the present invention. In this embodiment, a valve body of a second valve 55 is provided with a small through-hole 55a for communication between a cooling water intake portion 50 and a second cooling water discharge portion 52. Other arrangements are the same as in the first embodiment, so that the same components are denoted by the same numerals as in the first embodiments.

In this embodiment, the cooling water intake portion 50 and the second cooling water discharge portion 52 are always communicated with each other via the through-hole 55a, and a small quantity of cooling water always flows through the by-pass passage 9. Therefore, where it is desired that a small quantity of the cooling water is kept flowing through the by-pass passage 9 even when the second valve 55 of the thermostat valve 5 is closed, the third cooling water discharge portion 53, or an inlet of the hot water riser passage 10, can be closed independently. Accordingly, flows of water through the two passages can be controlled by one valve.

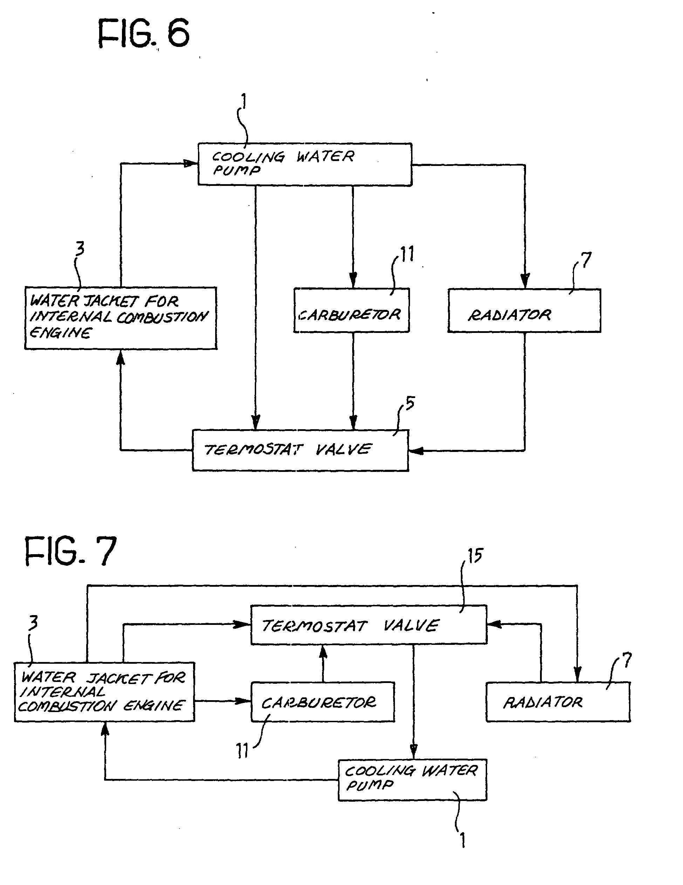

Fig. 6 is a total structural diagram showing a third embodiment of the present invention. In the previous embodiments, the invention has been applied to a cooling water circulating passage in which cooling water from a cooling water pump flows sequentially through the water jacket and the radiator back into the inlet of the cooling water pump. In this embodiment, on the other hand, the invention is applied to a cooling water circulating passage in which cooling water from the cooling water pump 1 flows sequentially through the radiator 7 and the water jacket 3 back into the inlet of the cooling water pump 1. With this arrangement, also, the same effects as in the above embodiments can be obtained.

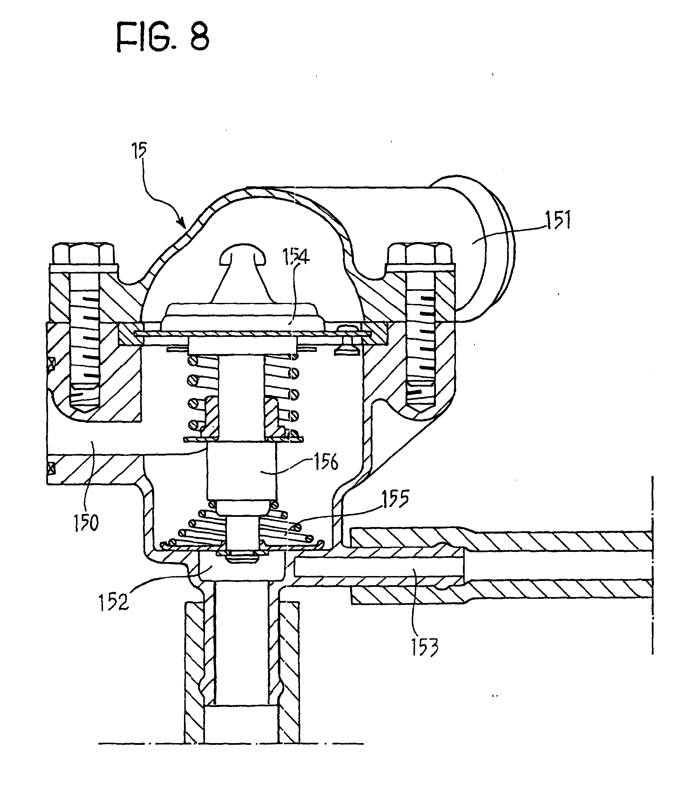

Next, Fig. 7 is a total structural diagram showing a fourth embodiment of the present invention, and Fig. 8 is a detailed vertical sectional side view of a thermostat valve 15 in Fig. 7. In this embodiment, a passage for feeding the cooling water from a water jacket 3 for an internal combustion engine directly to a radiator 7 and a passage extending from the water jacket 3 to a thermostat valve 15 via a carburetor 11 are provided.

In the thermostat valve 15, as shown in Fig. 8, a cooling water discharge portion 150 is connected to an intake port of the cooling water pump 1, a first cooling water intake portion 151 is connected to a cooling water outlet of the radiator 7, a second cooling water intake portion 152 is connected to a cooling water outlet of the water jacket 3 for the internal combustion engine, and a third cooling water intake portion 153 is connected to a cooling water outlet of the carburetor 11.

The temperature of the cooling water flowing into the thermostat valve 15 is detected by a temperature-sensitive portion 156 in which a wax or the like is contained. In the condition where the temperature of the cooling water is not higher than a predetermined temperature, a first valve 154 is closed, whereby the cooling water discharge portion 150 and the first cooling water intake portion 151 are shut off from each other. When the temperature of the cooling water is raised to or above the predetermined temperature, the first valve 154 is opened to communicate the first cooling water intake portion 151 with the cooling water discharge portion 150, so that the cooling water heated to a high temperature at the water jacket 3 of the internal combustion engine is supplied to the radiator 7, where it is cooled.

Further, in a lower portion of the thermostat valve 15, a second valve 155 is provided at the second cooling water intake portion 152 and a third cooling water intake portion 153, and is closed and opened in reverse conjunction with the opening and closure of the first valve 154. Therefore, where the temperature of the cooling water is not higher than the predetermined temperature, the second valve 155 is opened, whereby the cooling water discharge portion 150 is communicated with the second cooling water intake portion 152 and the third cooling water intake portion 153; on the other hand, when the temperature of the cooling water is raised to or above the predetermined temperature, the second valve 155 is closed, whereby the cooling water discharge portion 150 is shut off from the second cooling intake portion 152 and the third cooling water intake portion 153. Thus, at the time of starting the internal combustion engine at a low temperature or in similar cases, the cooling water heated in the water jacket 3 is supplied to a jacket for the carburetor 11, to heat the portions near a low-speed fuel supply port in the carburetor 11, whereby the low-speed fuel supply port is protected from icing.

In this way, in this embodiment also, the same effects as in the previous embodiments can be obtained.

### [Brief Description of the Drawings]

[Fig. 1]
   Fig. 1 is a total structural diagram showing one embodiment of the present invention;
[Fig. 2]
   Fig. 2 is a partly omitted schematic view of the same;
[Fig. 3]
   Fig. 3 is a detailed vertical sectional side view of a thermostat valve in Figs. 1 and 2, showing the condition where an outlet on the radiator side is opened;
[Fig. 4]
   Fig. 4 is also a detailed vertical sectional side view, showing the condition where the outlet is closed;
[Fig. 5]
   Fig. 5 is a detailed vertical sectional side view of a thermostat valve according to a second embodiment of the present invention;
[fig. 6]
   Fig. 6 is a total structural diagram showing a third embodiment of the present invention;
[Fig. 7]
   Fig. 7 is a total structural diagram showing a fourth embodiment of the present invention;
[Fig. 8]
   Fig. 8 is a detailed vertical sectional side view showing a thermostat valve in Fig. 7;
[Fig. 9]
   Fig. 9 is a view showing a cooling water passage structure used in comparison for illustrating the effects of the present invention;
[Fig. 10]
   Fig. 10 is a total structural diagram showing one embodiment of a conventional cooling water passage structure;
[Fig. 11]
   Fig. 11 is a partly omitted schematic view of the same; and
[Fig. 12]
   Fig. 12 is a detailed vertical sectional side view showing the thermostat valve in Figs. 10 and 11.

### [Explanation of Characters]

01, 1: cooling water pump; 02, 2: passage; 03, 3: water jacket; 04, 4: passage; 05, 5, 15: thermostat valve; 06, 6: passage; 07, 7: radiator; 08, 8: passage; 09, 9: by-pass passage; 010, 10: hot water riser passage; 011, 11: carburetor; 050, 50: cooling water intake portion; 051, 51: first cooling water discharge portion; 052, 52: second cooling water discharge portion; 053, 53: third cooling water discharge portion; 53a: through-hole; 054, 54, 154: first valve; 055, 55, 155: second valve; 55a: through-hole; 056, 56, 156: temperature-sensitive portion; 150: cooling water discharge portion; 151: first cooling water intake portion; 152: second cooling water intake portion; 153: third cooling water intake portion

## Claims

1. A cooling water passage structure for a water-cooled type internal combustion engine comprising a cooling water pump provided between a water jacket for said internal combustion engine and a radiator, a thermostat valve for controlling the quantity of cooling water circulated, and a by-pass passage through which said cooling water is circulated without being circulated via said radiator during when it is cold, wherein one end of a hot water riser passage disposed in parallel with said by-pass passage and extending via a carburetor is communicated with a port of said cooling water pump, and the other end is communicated with said thermostat valve independently from a by-pass passage port opening and closing portion of said thermostat valve.

2. The cooling water passage structure for a water-cooled type internal combustion engine, according to claim 1 wherein a port of said by-pass passage and a port of said hot water riser passage in said thermostat valve are opened and closed by the same valve body.

## Patentansprüche

1. Kühlwasserführung für eine wassergekühlte, innere Verbrennungskraftmaschine, die eine Kühlwasserpumpe, die zwischen einem Wassermantel für die innere Verbrennungskraftmaschine und einem Kühler angeordnet ist, ein Thermostatventil zur Steuerung der zirkulierten Kühlwassermenge, und eine Umgehungsleitung, über die das Kühlwasser ohne Passieren des Kühlers zirkuliert wird, wenn der Kühler kalt ist, umfasst, wobei ein Ende eines parallel zur Umgehungsleitung angeordneten Heißwasser-Steigrohrs, das sich über einen Vergaser erstreckt, mit einem Anschluss der Kühlwasserpumpe verbunden ist, und das andere Ende unabhängig vom Öffnungs- und Schließabschnitt des Anschlusses der Umgehungsleitung mit dem Thermostatventil verbunden ist.

2. Kühlwasserführung für eine wassergekühlte, innere Verbrennungskraftmaschine nach Anspruch 1, wobei ein Anschluss der Umgehungsleitung und ein Anschluss des Heißwasser-Steigrohrs im Thermostatventil durch denselben Ventilkörper geöffnet und geschlossen werden.

## Revendications

1. Structure de conduite d'eau de refroidissement pour un moteur à combustion interne du type refroidi par eau, comprenant une pompe à eau de refroidissement disposée entre une chemise d'eau pour ledit moteur à combustion interne et un radiateur, une vanne thermostatique destinée à réguler la quantité d'eau de refroidissement circulant, et une conduite de dérivation à travers laquelle ladite eau de refroidissement circule, sans la faire circuler par ledit radiateur lorsque celui-ci est froid, où une extrémité d'une conduite montante d'eau chaude disposée parallèlement à ladite conduite de dérivation et s'étendant par l'intermédiaire d'un carburateur est mise en communication avec un orifice de ladite pompe à eau de refroidissement, et l'autre extrémité est mise en communication avec ladite vanne thermostatique indépendamment d'une partie d'ouverture et de fermeture d'orifice de conduite de dérivation de ladite vanne thermostatique.

2. Structure de conduite d'eau de refroidissement pour un moteur à combustion interne du type refroidi par eau selon la revendication 1, dans laquelle un orifice de ladite conduite de dérivation et un orifice de ladite conduite montante d'eau chaude dans ladite vanne thermostatique sont ouverts et fermés par le même corps de vanne.
